# EUROPEAN PATENT SPECIFICATION

(11) **EP 4 374 394 B1**
(45) Date of publication and mention of the grant of the patent: **28.01.2026**
(21) Application number: 22753790.9
(22) Date of filing: 22.07.2022
(51) Int. Cl.: H01B 5/08, F16L 11/08

(54) **HOSE FOR PUMPING CONCRETE**
SCHLAUCH ZUM PUMPEN VON BETON
TUYAU POUR LE POMPAGE DE BÉTON

(30) Priority: 23.07.2021 US 202163225235 P
(43) Date of publication of application: 29.05.2024
(73) Proprietor: Danfoss A/S, 6430 Nordborg (DK)
(72) Inventor: DEDE, Ilkay, Corlu Tekirdag (TR); APTIOGULLARI, Erhan, Tekirdag (TR); CABADAK, Nadir, Kapakli Tekirdag (TR); YALVAC, Veysel, Tekirdag (TR); CAN KARABULUT, Burcu, Tekirdag (TR); DEVECI, Ferruh, 6430 Nordborg (DK)
(74) Representative: Keil & Schaafhausen Patentanwälte PartGmbB
(86) International application number: PCT/IB2022/056815
(87) International publication number: WO 2023/002456

(56) References cited:
- JP-A- H02 278 089
- US-A1- 2019 186 656

## Description

### CROSS-REFERENCE TO RELATED APPLICATION

This application is being filed on July 22, 2022, as a PCT International Patent application and claims the benefit of and priority to U.S. Provisional patent application Serial No. 63/225,235, filed July 23, 2021.

### TECHNICAL FIELD

The present disclosure relates generally to hoses. More particularly the present disclosure relates to hoses used for transporting concrete.

### BACKGROUND

With continuous development of engineering equipment globally, hoses have been developed for the transportation of concrete. Hoses for transportation of concrete can include multiple steel reinforcing layers. Concrete transported through the hoses are pumped at high pressures. Example high pressure hoses that include steel reinforcing layers are discussed in patents JP 4386499, JP6003273, JP5774279, CN204533881, US 2019/0186656 A1, and JP H02 - 278 089 A.

### SUMMARY

Aspects of the present disclosure relate to a concrete pump hose. The object underlying the invention is to provide an improved concrete pump hose. This problem is solved by a concrete hose pump with the features according to claim 1. The concrete pump hose includes an inner and outer polymeric layer, the concrete pump hose additionally includes a plurality of steel reinforcing layers positioned between the inner polymeric layer and the outer polymeric layer. Each of the steel reinforcing layers are made up of a plurality of steel cords arranged in a spiral, each of the steel cords including a plurality of steel members arranged in a stranded configuration. The concrete pump hose has a burst pressure of at least 275 Bar or at least 300 Bar. According to the invention, the concrete pump hose has an outer diameter in the range of 4.5 to 7.0 inches (114,3 mm to 177,8 mm), the plurality of steel cords each have a tensile breaking force of a least 4000 Newtons.

In some examples, the steel reinforcing layers of the concrete pump hose includes at least two, or at least three, or at least four steel reinforcing layers positioned one over the other.

According to the invention, each of the steel cords have a tensile breaking force of at least 4000 Newtons. In other examples, the steel cords each has tensile breaking force of 4655 Newtons. In other examples, the steel cords each have a tensile breaking force in the range of 4655 Newtons to 5145 Newtons.

In some examples, the concrete pump hose has a working pressure of at least 130 Bar.

According to the invention, the concrete hose pump has an outer diameter of between 114,3 mm to 177,8 mm (4.5 to 7.0 inches).

In some examples, the steel cords of adjacent ones of the steel reinforcing layers are wrapped in opposite helical directions about a central axis of the hose.

In some examples, each steel reinforcing layer includes an insulating material in which the steel cords of the steel reinforcing layer are embedded.

The present disclosure additionally relates to a concrete pump hose. In one aspect, the concrete pump hose includes an inner and outer polymeric layer. The concrete pump hose additionally includes a plurality of steel reinforcing layers positioned between the inner polymeric layer and the outer polymeric layer. Each of the steel reinforcing layers are made up of a plurality of steel cords arranged in a spiral, each of the steel cords including a plurality of steel members arranged in a stranded configuration. The steel cords each have a tensile breaking force in the range of breaking force in the range of 4655 Newtons to 5145 Newtons. The concrete pump hose has a burst pressure of at least 275 Bar or at least 300 Bar.

A variety of additional aspects will be set forth in the description that follows. The aspects can relate to individual features and to combinations of features. It is to be understood that both the foregoing general description and the following detailed description are exemplary and explanatory only and are not restrictive of the broad inventive concepts upon which the examples disclosed herein are based

### BRIEF DESCRIPTION OF THE DRAWINGS

Figure 1 is side view of a section of a concrete pump hose in accordance with the principles of this disclosure.
Figure 2 is cross-sectional view of the concrete pump hose of Figure 1 showing a plurality of steel layers, the steel layers being made up of a plurality of steel cords.
Figure 3 is a view of the steel cords of Figure 2, the steel cords being made up of braided steel members.
Figure 4 is a front view of the concrete pump hose of Figure 1.

### DETAILED DESCRIPTION

Concrete pump hoses are typically used in conjunction with a concrete pump to transfer liquid concrete by pumping. In some examples, a "line pump" uses a steel hose or a flexible hose to transport concrete. A line pump can be transportable and mounted to a truck or a different vehicle. The hoses used in line pumps are typically referred to as concrete pump hoses and are required to have a high burst pressure. Steel hoses typically have a relatively higher burst pressure than a flexible hose. Flexible hoses allow for easier movement of the hose and more applications.

In some examples, line pumps in combination with concrete pump hoses are used for low volume building applications such as swimming pools, sidewalks, single family home concrete slabs, and other various ground slabs. Line pumps are hydraulically operated and provide high pressures in order to transport concrete. Line pumps typically utilize two alternating hydraulic cylinders in parallel with one another. While one of the hydraulic cylinders pulls concrete from a hopper that has mixed concrete, the other hydraulic cylinder pushes the concrete out through the hose creating a continuous flow of high pressure concrete. A high pressure of at least 130 Bar is pumped into the hose to continuously to move the concrete. To withstand the high pressure, the concrete pump hose needs to have a burst pressure which is greater than 130 Bar. The present disclosure relates to a concrete pump hose that is relatively flexible and also has a high burst pressure. The high burst pressure can, in some examples, be accomplished through the use of steel reinforcing layers.

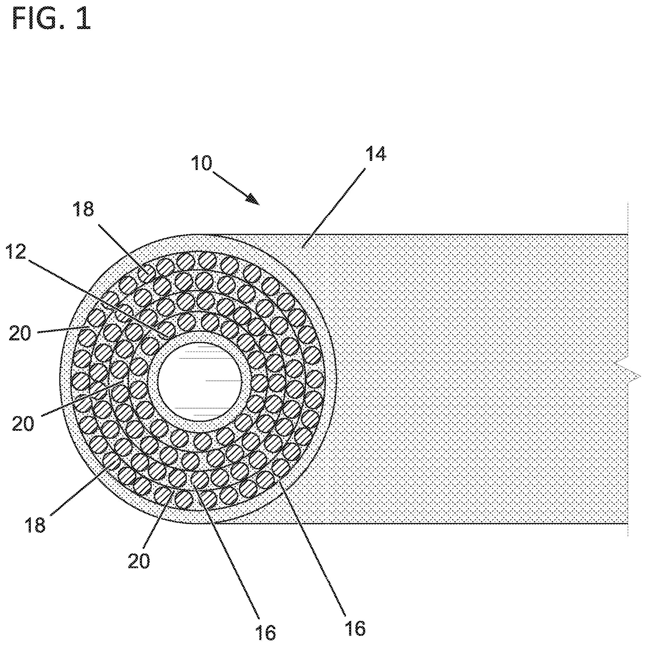

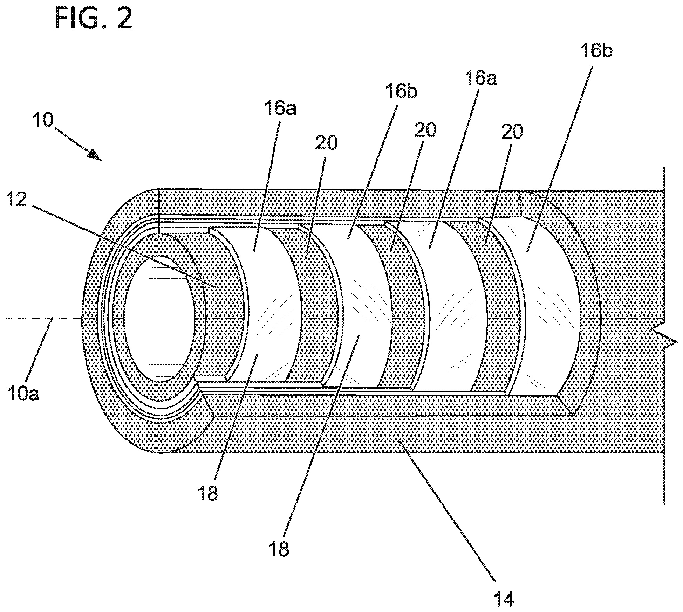

Figures 1 and 2 show a concrete pump hose 10 used to transport concrete. The concrete pump hose 10 includes an inner polymeric layer 12 and an outer polymeric layer 14. The concrete pump hose 10 includes a plurality of steel reinforcing layers 16 in between the inner and outer polymeric layers 12, 14, which assist in withstanding the high pressures required to transport concrete. In the depicted example, there are four steel reinforcing layers 16. Other configurations are possible such as two steel reinforcing layers, or three steel reinforcing layers or more than four steel reinforcing layers. The inner polymeric layer 12 surrounds a bore. In some examples, the bore is smooth and allows for concrete to flow through the concrete pump hose 10. In some examples, the inner polymeric layer 12 is formed from an abrasion-resistant material. In some examples, the inner polymeric layer 12 has a higher abrasion resistance in comparison to the outer polymeric layer 14. Having a higher abrasion resistance increases durability and allows for concrete to flow through the bore of the concrete pump hose 10 for longer repeated use. In some examples, the inner polymeric layer 12 is made from an abrasion resistant synthetic rubber. In other examples, the inner polymeric layer 12 is made from a natural rubber.

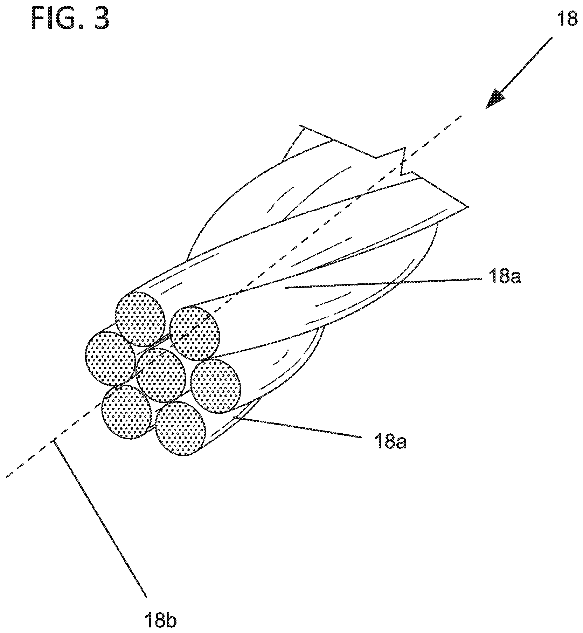

The steel reinforcing layers 16 each include a plurality of steel cords 18 arranged in a spiral (see Figure 2). The steel reinforcing layers 16 in the depicted embodiment include at least seventy-two steel cords 18. In other embodiments, the steel reinforcing layers 16 each include at least sixty steel cords 18 or at least seventy steel cords 18. The steel cords 18 are made up of a plurality of steel members 18a arranged in a stranded configuration as can be seen Figure 3. In some embodiments, the steel members 18a are arranged in an "S" twist (as the strand extends along a strand axis 18b away from a viewer, the strand rotates counter-clockwise); in other embodiments, the steel members 18a are configured in a "Z" twist (as the strand extends along the strand axis 18b away from a viewer, the strand rotates clockwise). The direction of the twist, e.g., "Z" or "S", does not affect the breaking force of the steel members, however, it may impact the how the steel cords 18 are placed in the steel reinforcing layers.

In some embodiments, the steel reinforcing layers assist the hose in having a high burst pressure. In some examples, the burst pressure of the concrete hose 10 has a burst pressure of at least 275 Bar or at least 300 Bar. In some examples, the burst pressure is greater than 300 Bar.

Each of the steel cords 18 have a tensile breaking force of at least 4000 Newtons. In other embodiments, each of the steel cords 18 have a tensile breaking force of at least 4500 Newtons or at least 4655 Newtons. In still other embodiments, each of the steel cords 18 have a tensile breaking force in the range of 4655 Newtons to 5145 Newtons.

In some embodiments, the steel reinforcing layers 16 are embedded within an insulating material 20 (seen easily at Figures 1, 2, and 4). In some embodiments, the insulating material 20 can be made from SBR (styrene butadiene rubber) or NR (natural rubber) or other similar materials. In some embodiments, the insulating material 20 is made from the same material as the inner and outer polymeric layers 12, 14.

In some embodiments, the insulating material 20 is made from different material to the inner and outer polymeric layers 12, 14. In some embodiments, the insulating material 20 has a greater adhesive property than the inner and outer layers allowing for adhesion to the steel reinforcing layers 16. In some other examples, the outer polymeric layer 14 is a different material than the inner material and insulating material 20. In some examples, the outer polymeric layer 14 is exposed to UV radiation from the sun which can cause the outer polymeric layer 14 to deteriorate quickly. In some examples, the outer polymeric layer 14 is made from a UV resistant polymeric material. In some examples, the outer polymeric layer is made from an NR or SBR similar to the insulating material. In some examples, the outer polymeric layer 14 is made from an EPDM polymer (ethylene propylene diene monomer rubber) or an SBR polymer (styrene-butadiene rubber). In other examples, the outer polymeric layer 14 is made of an SBR polymer (styrene-butadiene rubber). In other examples, the outer layer is made from a PVC polymer (polyvinyl chloride).

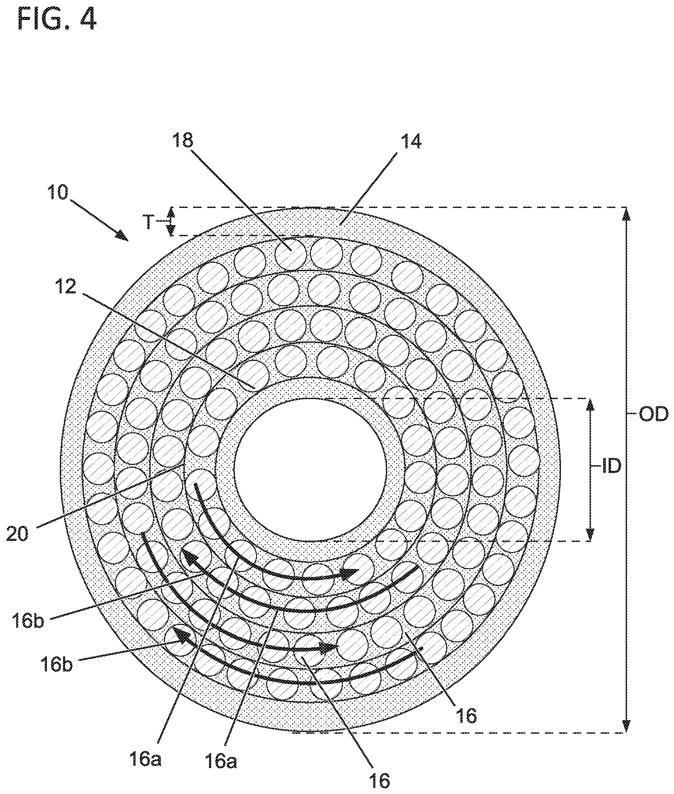

As can be seen at Figure 2, the steel reinforcing layers 16 are wrapped about a hose axis 10a alternating opposite helical directions. In this example, the steel reinforcing layer 16 adjacent to the inner polymeric layer 12 includes steel cords 18 wrapped helically in a clockwise direction 16a, the next adjacent steel reinforcing layer 16 is wrapped helically in a counterclockwise direction 16b. The steel cords 18 alternate in a pattern, switching directions which they are wrapped, throughout the concrete pump hose 10 up to the outer polymeric layer 14. The pattern can continue for as many steel reinforcing layers 16 as the concrete pump hose 10 includes (the pattern can also be seen in Figure 4). In other examples, the steel cords 18 adjacent to the inner polymeric layer 12 can be wrapped in a counterclockwise direction, alternating the pattern to the outer polymeric layer. In some embodiments, the steel cords 18 have a small diameter which allows for more steel cords 18 in each layer. In some embodiments, there are more than twelve steel cords per polymeric layer. The pattern allows the hose to maintain a desired flexibility while also maintaining high burst pressure.

In some examples, the steel members 18a of the steel cords 18 wrapped in the clockwise direction 16a are in an "S" configuration, and the steel members 18a of the steel cords 18 wrapped in the counter-clockwise direction 16b are wrapped in a "Z" configuration. In other examples, the steel members 18a of the steel cords 18 wrapped in the clockwise direction 16a are in a "Z" configuration and the steel members 18a of
the steel cords 18 wrapped in the counter-clockwise direction 16b are wrapped in a "S" configuration. In some other examples, the steel members 18a of the steel cords 18 wrapped in the clockwise direction 16a and the steel members 18a of the steel cords 18 wrapped in the counterclockwise direction 16b are all wrapped in a "Z" or "S" configuration depending upon the desired strength and flexibility of the concrete pump hose 10.

In some embodiments, the concrete pump hose 10 has an outer diameter OD (see Figure 4) of 158 mm (6.22 in) and an inner diameter ID of 127 mm (5 inches). In this embodiment, the outer polymeric layer 14 has a thickness of 3.2 mm (.125 inches), and the inner polymeric layer 12 has a thickness of 6mm (.24 inches).

In other embodiments, the concrete pump hose 10 has an outer diameter OD of 133mm (5.24 inches) and an inner diameter ID of 101.6 mm (4 inches). Similar to the above embodiment, the outer polymeric layer has a thickness of 3.2 mm (.125 in) and the inner polymeric layer has a thickness of 6mm (.24 inches).

In one example, the concrete pump hose has an outer diameter OD in the range of 113,3 mm to 177,8 mm (4.5 to 7.0) inches or in the range of 127 mm to 165,1 mm (5.0 to 6.5 inches), an inner diameter ID in the range of 88,9 mm to 139,7 mm (3.5 to 5.5 inches), and a wall thickness T in the range of 12,7 mm to 17,78 mm (0.5 to 0.7 inches).

In some examples, the concrete hose pump has a greater outer diameter OD than 177,8 mm (7 inches); in other examples, a lesser outer diameter than 114,3 mm (4.5 inches). It is understood that the above description is intended to be illustrative, and not restrictive.

The material has been presented to enable any person skilled in the art to make and use the concepts described herein, and is provided in the context of particular embodiments, variations of which will be readily apparent to those skilled in the art (e.g., some of the disclosed embodiments may be used in combination with each other). Many other embodiments will be apparent to those of skill in the art upon reviewing the above description. The scope of the embodiments herein therefore should be determined with reference to the appended claims, along with the full scope to which such claims are entitled.

The various embodiments described above are provided by way of illustration only and should not be construed to be limiting in any way. Various modifications can be made to the embodiments described above without departing from the scope of the claims.

## Claims

1. A concrete pump hose (10) comprising:
an inner polymeric layer (12) and an outer polymeric layer (14); and
a plurality of steel reinforcing layers (16) positioned between the inner polymeric layer (12) and the outer polymeric layer (14), the steel reinforcing layers (16) each including a plurality of steel cords (18) arranged in a spiral, each of the steel cords (18) including a plurality of steel members (18a) arranged in a stranded configuration;
wherein the concrete pump hose (10) has a burst pressure of at least 275 Bar, **characterized in that** the concrete pump hose (10) has an outer diameter in the range of 4.5 to 7.0 inches (114,3 mm to 177,8 mm), and **in that** the plurality of steel cords (18) each have a tensile breaking force of a least 4000 Newtons.

2. The concrete pump hose (10) of claim 1, wherein the plurality of steel reinforcing layers (16) include at least two, or at least three, or at least four steel reinforcing layers (16) positioned one over the other.

3. The concrete pump hose (10) of claim 1 or 2, wherein the steel reinforcing layers (16) are embedded in a buffer material.

4. The concrete pump hose (10) of any one of the preceding claims, wherein each steel reinforcing layer (16) includes at least sixty, or at least seventy, or at least seventy-two of the steel cords (18).

5. The concrete pump hose (10) of any one of the preceding claims , wherein the concrete pump hose (10) has a working pressure of at least 130 Bar.

6. The concrete pump hose (10) of any one of the preceding claims, wherein the plurality of steel cords (18) each have a tensile breaking force of at least 4500 Newtons.

7. The concrete pump hose (10) of any one of the preceding claims, wherein the plurality of steel cords (18) each have a tensile breaking force of at least 4655 Newtons.

8. The concrete pump hose (10) of any one of the preceding claims, wherein the plurality of steel cords (18) each have a tensile breaking force in the range of 4655 Newtons to 5145 Newtons.

9. The concrete pump hose (10) of any one of the preceding claims, wherein the steel cords of adjacent ones of the steel reinforcing layers (16) are wrapped in opposite helical directions about a central axis of the concrete pump hose (10).

10. The concrete pump hose (10) of any one of the preceding claims 1-, wherein each steel reinforcing layer (16) includes an insulating material (20) in which the steel cords (18) of the steel reinforcing layer (16) are embedded.

11. The concrete pump hose (10) of any one of the preceding claims, wherein each polymeric layer (12, 14) comprises more than twelve steel cords (18).

12. The concrete pump hose (10) of any one of the preceding claims, wherein the concrete pump hose (10) has a burst pressure of at least 300 Bar.

## Patentansprüche

1. Betonpumpenschlauch (10), der Folgendes umfasst:
eine innere Polymerschicht (12) und eine äußere Polymerschicht (14); und
mehrere Stahlverstärkungsschichten (16), die zwischen der inneren Polymerschicht (12) und der äußeren Polymerschicht (14) positioniert sind, wobei die Stahlverstärkungsschichten (16) jeweils mehrere Stahlseile (18) umfassen, die in einer Spirale angeordnet sind, wobei jedes der Stahlseile (18) mehrere Stahlelemente (18a) umfasst, die in einer Litzenauslegung angeordnet sind;
wobei der Betonpumpenschlauch (10) einen Berstdruck von mindestens 275 bar aufweist, **dadurch gekennzeichnet, dass** der Betonpumpenschlauch (10) einen Außendurchmesser im Bereich von 4,5 bis 7,0 Zoll (114,3 mm bis 177,8 mm) aufweist, und dadurch, dass die mehreren Stahlseile (18) jeweils eine Zugbruchkraft von mindestens 4000 Newton aufweisen.

2. Betonpumpenschlauch (10) nach Anspruch 1, wobei die mehreren Stahlverstärkungsschichten (16) mindestens zwei oder mindestens drei oder mindestens vier übereinander positionierte Stahlverstärkungsschichten (16) umfassen.

3. Betonpumpenschlauch (10) nach Anspruch 1 oder 2, wobei die Stahlverstärkungsschichten (16) in ein Puffermaterial eingebettet sind.

4. Betonpumpenschlauch (10) nach einem der vorhergehenden Ansprüche, wobei jede Stahlverstärkungsschicht (16) mindestens sechzig oder mindestens siebzig oder mindestens zweiundsiebzig der Stahlseile (18) umfasst.

5. Betonpumpenschlauch (10) nach einem der vorhergehenden Ansprüche, wobei der Betonpumpenschlauch (10) einen Arbeitsdruck von mindestens 130 bar aufweist.

6. Betonpumpenschlauch (10) nach einem der vorhergehenden Ansprüche, wobei die mehreren Stahlseile (18) jeweils eine Zugbruchkraft von mindestens 4500 Newton aufweisen.

7. Betonpumpenschlauch (10) nach einem der vorhergehenden Ansprüche, wobei die mehreren Stahlseile (18) jeweils eine Zugbruchkraft von mindestens 4655 Newton aufweisen.

8. Betonpumpenschlauch (10) nach einem der vorhergehenden Ansprüche, wobei die mehreren Stahlseile (18) jeweils eine Zugbruchkraft im Bereich von 4655 Newton bis 5145 Newton aufweisen.

9. Betonpumpenschlauch (10) nach einem der vorhergehenden Ansprüche, wobei die Stahlseile benachbarter Stahlverstärkungsschichten (16) in entgegengesetzte Spiralrichtungen um eine Mittelachse des Betonpumpenschlauchs (10) gewickelt sind.

10. Betonpumpenschlauch (10) nach einem der vorhergehenden Ansprüche 1-, wobei jede Stahlverstärkungsschicht (16) ein Isoliermaterial (20) umfasst, in das die Stahlseile (18) der Stahlverstärkungsschicht (16) eingebettet sind.

11. Betonpumpenschlauch (10) nach einem der vorhergehenden Ansprüche, wobei jede Polymerschicht (12, 14) mehr als zwölf Stahlseile (18) umfasst.

12. Betonpumpenschlauch (10) nach einem der vorhergehenden Ansprüche, wobei der Betonpumpenschlauch (10) einen Berstdruck von mindestens 300 bar aufweist.

## Revendications

1. Tuyau de pompe à béton (10) comprenant :
une couche polymère interne (12) et une couche polymère externe (14) ; et
une pluralité de couches de renfort en acier (16) positionnées entre la couche polymère interne (12) et la couche polymère externe (14), les couches de renfort en acier (16) comprenant chacune une pluralité de câbles d'acier (18) disposés en spirale, chacun des câbles d'acier (18) comprenant une pluralité d'éléments en acier (18a) dans une configuration toronnée ;
le tuyau de pompe à béton (10) présentant une pression d'éclatement d'au moins 275 bars, **caractérisé en ce que** le tuyau de pompe à béton (10) présente un diamètre extérieur compris entre 4,5 et 7,0 pouces (entre 114,3 mm et 177,8 mm), et **en ce que** la pluralité de câbles d'acier (18) ont chacun une force de rupture par traction d'au moins 4 000 Newtons.

2. Tuyau de pompe à béton (10) selon la revendication 1, la pluralité de couches de renfort en acier (16) comprenant au moins deux, ou au moins trois, ou au moins quatre couches de renfort en acier (16) positionnées l'une sur l'autre.

3. Tuyau de pompe à béton (10) selon la revendication 1 ou 2, les couches de renfort en acier (16) étant noyées dans un matériau tampon.

4. Tuyau de pompe à béton (10) selon l'une quelconque des revendications précédentes, chaque couche de renfort en acier (16) comprenant au moins soixante, ou au moins soixante-dix, ou au moins soixante-douze des câbles d'acier (18).

5. Tuyau de pompe à béton (10) selon l'une quelconque des revendications précédentes, le tuyau de pompe à béton (10) présentant une pression de service d'au moins 130 bars.

6. Tuyau de pompe à béton (10) selon l'une quelconque des revendications précédentes, la pluralité de câbles d'acier (18) présentant chacun une force de rupture par traction d'au moins 4 500 Newtons.

7. Tuyau de pompe à béton (10) selon l'une quelconque des revendications précédentes, la pluralité de câbles d'acier (18) présentant chacun une force de rupture par traction d'au moins 4 655 Newtons.

8. Tuyau de pompe à béton (10) selon l'une quelconque des revendications précédentes, la pluralité de câbles d'acier (18) présentant chacun une force de rupture par traction dans la plage comprise entre 4 655 Newtons et 5 145 Newtons.

9. Tuyau de pompe à béton (10) selon l'une quelconque des revendications précédentes, les câbles d'acier de couches adjacentes parmi les couches de renfort en acier (16) étant enroulés dans des directions hélicoïdales opposées autour d'un axe central du tuyau de pompe à béton (10).

10. Tuyau de pompe à béton (10) selon l'une quelconque des revendications précédentes 1-, chaque couche de renfort en acier (16) comprenant un matériau isolant (20) dans lequel les câbles d'acier (18) de la couche de renfort en acier (16) sont noyés.

11. Tuyau de pompe à béton (10) selon l'une quelconque des revendications précédentes, chaque couche polymère (12, 14) comprenant plus de douze câbles d'acier (18).

12. Tuyau de pompe à béton (10) selon l'une quelconque des revendications précédentes, le tuyau de pompe à béton (10) présentant une pression d'éclatement d'au moins 300 bars.
